# EUROPÄISCHE PATENTSCHRIFT

(11) **EP 3 143 864 B1**
(45) Veröffentlichungstag und Bekanntmachung des Hinweises auf die Patenterteilung: **15.08.2018**
(21) Anmeldenummer: 16176792.6
(22) Anmeldetag: 29.06.2016
(51) Int. Cl.: A01D 45/02, A01D 41/14, A01D 57/22

(54) **ERNTEVORSATZ**
HARVESTING HEADER
TÊTE DE CUEILLEUR

(30) Priorität: 18.09.2015 DE 102015115815
(43) Veröffentlichungstag der Anmeldung: 22.03.2017
(73) Patentinhaber: CLAAS Hungaria Kft., 5200 Törökszentmiklos (HU)
(72) Erfinder: Lenti, Tibor, 5662 Csanádapáca (HU); Pàzsik, András, 5600 Békéscsaba (HU); Esses, Sándor, 5240 T Túrkeve (HU); Csanádi, Tamás, 8151 Szabadbattyán (HU); Bálint, Norbert, 6412 Balotaszállás (HU)
(74) Vertreter: Budach, Steffen

(56) Entgegenhaltungen:
- EP-A1- 1 078 567
- EP-A1- 2 862 433
- WO-A1-2011/070802
- US-A- 2 963 843
- US-A1- 2015 068 179

## Beschreibung

Die vorliegende Erfindung betrifft einen Erntevorsatz für in Reihen stehendes Erntegut, mit zumindest zwei achsparallel zueinander an einem Rahmen angeordneten Pflückeinheiten, die jeweils von einer sich in Längsrichtung der Pflückeinheit erstreckenden, nach unten offenen, von in einer gemeinsamen horizontalen Ebene liegenden Randabschnitten begrenzten Teilerspitze, welche als zur Längsachse der Teilerspitze achsensymmetrisches Hohlprofil ausgeführt ist und einen im Wesentlichen bogenförmigen Querschnitt mit in Längsrichtung der Pflückeinheit zunehmenden Radius aufweist, zumindest abschnittsweise bedeckt sind.

Erntevorsätze der eingangs genannten Art kommen zum Einsatz, um in Reihen stehendes, stängeliges Erntegut wie Mais, Sonnenblumen oder dergleichen zu ernten. Hierzu wird in Reihen mit bestimmten Abständen zueinander angeordnetes stängeliges Erntegut an dem Erntevorsatz achsparallel zueinander angeordneten Pflückeinheiten zugeführt, welche sich im Wesentlichen parallel zu den Reihen mit Erntegut erstrecken. Zur präzisen und möglichst verlustfreien Zuführung des stängeligen Erntegutes, das heißt ohne Verluste der Fruchtstände beziehungsweise Spritzkornverluste, sind so genannte Teilerspitzen oberhalb der Pflückeinheiten angeordnet, welche diese abschnittsweise abdecken. Die Qualität der Zuführung wird beispielsweise durch ungleichmäßige Reihenabstände des Erntegutes, Richtungswechsel im Feld oder das Ernten am Hang beeinflusst. Des Weiteren beeinflusst die geometrische Gestaltung der Teilerspitze das Zuführverhalten des stängeligen Erntegutes während der Zuführphase zu den Pflückeinheiten, von denen die Fruchtstände von den Stängeln abgetrennt werden. Hierbei kann das Erntegut zu Bewegungen angeregt werden, das heißt zu einem unkontrollierten Schwingen in alle Richtungen, insbesondere quer zur Längsrichtung der Teilerspitze, was auf Grund der stärkeren Bewegung des Erntegutes zu einem Lösen von Kolben oder Körnern führen kann, bevor diese die Pflückeinheit erreichen.

Aus der US 2015/068179 A1 ist ein Erntevorsatz gemäß dem Oberbegriff des Anspruches 1 bekannt. Der Erntevorsatz weist bogenförmige, nach unten offene Teilerspitzen auf, welche beidseitig mit sich in Längsrichtung der Teilerspitze erstreckenden Ausschnitten oder Aussparungen versehen sind, deren Ränder die nach unten offene Teilerspitze begrenzen. Die Ausschnitte oder Aussparungen erstrecken sich abschnittsweise zwischen einer vorderen und einem hinteren Ende der Teilerspitze. Dabei nimmt der Abstand zwischen dem Boden und den sich in Längsrichtung der Teilerspitze erstreckenden Rändern zu. Die tangentiale Ausdehnung der gewölbten Oberfläche nimmt in axialer Richtung ab. Die Ausschnitte oder Aussparungen sollen dazu beitragen, Kolbenverluste oder Spritzkornverluste bei der Maisernte zu reduzieren, wenn die Reihenbreite der Maisstängel nicht exakt mit dem Abstand der Pflückeinheiten zueinander korrespondiert. Durch die beiderseits der jeweiligen Teilerspitze angeordneten Ausschnitte oder Aussparungen gelangt das Erntegut zu einem späteren Zeitpunkt mit dem jeweiligen der Führung des Maisstängels dienenden Rand der Teilerspitze in Berührung.

Die EP 2 862 433 A1 beschreibt einen Erntevorsatz für in Reihen stehendes Erntegut, mit zumindest zwei achsparallel zueinander an einem Maschinenrahmen angeordneten Pflückeinheiten, die jeweils von einer sich in Längsrichtung der Pflückeinheit erstreckenden, nach unten offenen Teilerspitze, welche einen im Wesentlichen bogenförmigen Querschnitt mit in Längsrichtung der Pflückeinheit zunehmenden Radius aufweist, abschnittsweise bedeckt sind. Die Teilerspitze weist ausgehend vom Beginn ihres vorderen Abschnittes bis zum Erreichen ihres Endabschnittes einen sich kontinuierlich verändernden Querschnittsverlauf auf.

Die EP 1 078 567 A1 beschreibt einen Erntevorsatz für in Reihen stehendes Erntegut, mit zumindest zwei achsparallel zueinander an einem Rahmen angeordneten Pflückeinheiten, die jeweils von einer sich in Längsrichtung der Pflückeinheit erstreckenden, nach unten offenen, von Randabschnitten begrenzten Teilerspitze, welche einen im Wesentlichen bogenförmigen Querschnitt mit in Längsrichtung der Pflückeinheit zunehmenden Radius aufweist, zumindest abschnittsweise bedeckt sind.

Ausgehend von dem vorgenannten Stand der Technik liegt der Erfindung die Aufgabe zugrunde, einen Erntevorsatz bereitzustellen, der sich durch eine optimierte Zuführung von stängeligem Erntegut, insbesondere bei nicht idealen Erntebedingungen, auszeichnet.

Diese Aufgabe wird erfindungsgemäß durch einen Erntevorsatz gemäß dem unabhängigen Anspruch 1 gelöst.

Vorteilhafte Weiterbildungen der Erfindung sind Gegenstand der Unteransprüche.

Gemäß dem Anspruch 1 wird vorgeschlagen, dass die Teilerspitze ein Anfangssegment, welches sich ausgehend von einem vorderen Ende der Teilerspitze in Richtung des Maschinenrahmens erstreckt, ein Mittelsegment und ein Endsegment, welches mit einem hinteren, dem Maschinenrahmen zugewandten Ende der Teilerspitze abschließt, umfasst, wobei zwischen dem Anfangssegment und dem Endsegment das Mittelsegment vorgesehen ist, dessen die Teilerspitze an ihrer offenen Unterseite in Längsrichtung begrenzenden, in einer Ebene liegenden Randabschnitte einen abschnittsweise konkaven Verlauf aufweisen, wobei der konkave Verlauf der Randabschnitte eine beidseitige Einschnürung der Teilerspitze ausbildet, welche für die Zuführung des stängeligen Erntegutes vorteilhaft ist. Der Vorteil dieser modifizierten Geometrie der Teilerspitze besteht darin, dass der Kontakt der Teilerspitze mit dem stängeligem Erntegut in einem größeren Abstand zum Boden erfolgt. Durch den größeren Abstand zum Boden kann die Ablenkung des Erntegutes durch die Teilerspitze vermindert werden. Dieser Effekt kann zu einem günstigeren Geschwindigkeits- beziehungsweise Beschleunigungsverhalten der Fruchtstände führen, was sich positiv auf das Verlustniveau während des Ernteverlaufs auswirkt. Im Gegensatz zu dem aus der US2015/0068179 A1 bekannten Erntevorsatz wird bei der erfindungsgemäßen Lösung zusätzlich der Vorteil einer geschlossenen Wandung der Teilerspitze beim Annehmen und Führen des stängeligen Erntegutes beibehalten, welcher durch das Vorsehen von Ausschnitten oder Aussparungen, wie es die US2015/0068179 A1 vorsieht, verloren geht, da hier lediglich die nicht in einer Ebene liegenden Ränder der Teilerspitze zur Annahme und Führung beitragen. Gegenüber dem in der EP 2 862 433 A1 beschriebenen Halmteiler bleiben durch die nur abschnittsweise Modifikation der Geometrie im Mittelsegment des beanspruchten Halmteilers die guten Eigenschaften des Halmteilers mit konventioneller Form zumindest des Anfangssegmentes bei der Gutannahme erhalten. Erst mit zunehmender Aufweitung der Teilerspitze kommt die Einschnürung im Mittelsegment bei der Gutführung zum Tragen. Somit verbleibt gegenüber der Lösung gemäß der EP 2 862 433 A1 ein längerer Weg, während dessen das Erntegut von den Anfangssegmenten in den Pflückspalt eingeführt wird.

Weiterhin wird gemäß dem Anspruch 2 vorgeschlagen, dass das Mittelsegment an seiner offenen Unterseite in diese in Längsrichtung begrenzenden Randabschnitte mündende Wandabschnitte aufweist, die einen abschnittsweise konkaven Verlauf aufweisen. Die Wandabschnitte können sich abschnittsweise in radialer Richtung der Teilerspitze einschnüren. Darüber hinaus können die Wandabschnitte in tangentialer Richtung ebenfalls einen konkaven Verlauf aufweisen. Das heißt, dass der Abstand des Randabschnittes, in den der Wandabschnitt mündet, zum Boden in axialer Richtung variiert. Insbesondere nimmt der Abstand des Randabschnittes zum Boden ausgehend vom Beginn des Wandabschnittes bis zum Erreichen eines maximalen Abstandes zu, bevor er in Richtung des auslaufenden Wandabschnittes wieder abnimmt.

Die beidseitig geschlossene Einschnürung der Teilerspitze, wie sie gemäß dem unabhängigen Anspruch 1 und dem Unteranspruch 2 vorgeschlagen wird, hat den Effekt, dass bei der Annahme und dem Einführen des stängeligen Erntegutes in Richtung der jeweiligen Pflückeinheit die auf das Erntegut durch Berührung mit der Teilerspitze übertragene Geschwindigkeits- beziehungsweise Beschleunigungskomponente zu einem späteren Zeitpunkt beziehungsweise wenn sich die Pflückeinheit bereits weiter in Richtung des Erntegutes bewegt hat wirksam wird, so dass das Verlustniveau gesenkt wird.

Vorzugsweise kann die Teilerspitze zwischen ihrem Anfangssegment und ihrem Endsegment ein Mittelsegment aufweisen, dessen Querschnittsform in einem oberen Abschnitt eine im Wesentlichen bogenförmige Kontur und in einem unteren Abschnitt eine im Wesentlichen trapezförmige Kontur aufweist. Die spezielle Formgebung des Mittelsegmentes verringert eine Anregung des stehenden Erntegutes, welche zu rüttelnden Bewegungen des Erntegutes führen könnten, die wiederum Verluste der Fruchtstände zur Folge haben könnten.

Vorteilhafterweise kann die jeweilige Teilerspitze zwischen einem sich verjüngenden vorderen Ende und einem sich aufweitenden hinteren Ende mit einander gegenüberliegenden, in die Randabschnitte mündenden Wandabschnitten ausgeführt sein, die einen sich in tangentialer Richtung der Teilerspitze verringernden Radius aufweisen.

Insbesondere können die Randabschnitte und/oder die Wandabschnitte in axialer Richtung der Teilerspitze einen abschnittsweise stetigen oder unstetigen Verlauf aufweisen. So können die Verläufe der Randabschnitte und/oder der Wandabschnitte in axialer Richtung der Teilerspitze abschnittsweise einem Polygonzug entsprechen. Diese Ausgestaltung kann in Abhängigkeit von dem zur Herstellung der Teilerspitze angewandten Fertigungsverfahren gewählt werden.

Dabei können die einander gegenüberliegenden Wandabschnitte in tangentialer Richtung einen im Wesentlichen ebenen Oberflächenverlauf aufweisen. Die einander gegenüberliegenden Wandabschnitte können zu einer Verbesserung der Gutführung beitragen.

Vorzugsweise können die Wandabschnitte symmetrisch zueinander angeordnet sein. Dies ist vor allem aus fertigungstechnischen Gründen vorteilhaft.

Insbesondere können die ebenen Wandabschnitte planparallel angeordnet sein.

Gemäß einer alternativen Ausgestaltung können die ebenen Wandabschnitte eine Neigung zur Vertikalen aufweisen. Hierbei kann die Neigung der ebenen Wandabschnitte nach innen gerichtet sein. Das heißt, dass die Ränder der Wandabschnitte, die die offene Unterseite der Teilerspitze begrenzen, einander stärker zugewandt sind, als der sich in tangentialer Richtung erstreckende Teil der Wandabschnitte. Dies führt dazu, dass das Erntegut später mit den Wandabschnitten in Berührung kommt, da deren Oberfläche einen größeren Abstand zum Boden aufweisen. Dennoch wird eine Führung des Erntegutes erreicht.

Weiterhin können die Ränder im Bereich des vorderen Endes der Teilerspitze einen abschnittsweise divergierenden Verlauf aufweisen.

Ebenso können die Ränder im Bereich des hinteren Endes einen abschnittsweise divergierenden Verlauf aufweisen.

Besonders vorteilhaft ist, dass das Mittelsegment eine Kontur aufweist, mittels der eine im Wesentlichen konstante Winkelgeschwindigkeit von entlang des Mittelsegmentes geführten Erntegutes erreichbar ist. Dies hat den Vorteil, dass, insbesondere bei trockenem Erntegut, bezüglich der Teilerspitze respektive der Pflückeinheiten von nicht in idealer Position stehendem Erntegut dieses durch die Ablenkung des Mittelsegmentes gerüttelt wird, was zu einer signifikanten Reduzierung von Verlusten der Fruchtstände führt. Dem gegenüber führt eine Ausbildung der Teilerspitze gemäß der US2015/0068179 A1 wie auch der EP 2 862 433 A1 dazu, dass das stehende Erntegut während es von der Teilerspitze in Richtung der Pflückeinheiten abgelenkt wird, unterschiedliche Winkelgeschwindigkeiten aufweist, was zu einer Anregung quer zur Bewegungsrichtung des Erntegutes führt, wodurch sich die Fruchtstände früher von dem Erntegut lösen können.

Des Weiteren kann sich zwischen ihrem vorderen Ende und ihrem hinteren Ende in axialer Richtung der Teilerspitze einander gegenüberliegende, in die Randabschnitte mündende Wandabschnitte eine Mantelfläche ausbilden, die einen sich in tangentialer Richtung der Teilerspitze abschnittsweise verringernden Radius aufweist, wobei die Verringerung der Radien entlang der axialen Erstreckung des Wandabschnittes in radialer Richtung eine Einschnürung ausbildet, die sich ausgehend von einer Wandabschnittskante bis zu dem jeweiligen Randabschnitt erstreckt, wobei die Wandabschnittskante den Übergang zwischen der Mantelfläche und den Wandab schnitten bildet, wobei oberhalb dieser Wandabschnitte beziehungsweise der Wandabschnittskante der jeweilige Radius der Mantelfläche in tangentialer Richtung konstant ist, so dass der im Wesentlichen bogenförmige Verlauf der Mantelfläche erhalten bleibt, wobei die jeweilige in axialer Richtung verlaufende Wandabschnittskante im Wesentlichen einen bogenförmigen Verlauf beschreibt, wobei dieser bogenförmige Verlauf der Wandabschnittskante sowie der Verlauf des darunter befindlichen Wandabschnittes derart ausgebildet sind, dass sich in axialer Richtung gesehen eine konstante Neigung einstellt.

Die vorliegende Erfindung wird nachstehend anhand eines in den Zeichnungen dargestellten Ausführungsbeispieles erläutert.

Es zeigen:
- Fig. 1: eine schematische Darstellung eines Erntevorsatzes in einer Draufsicht;
- Fig. 2: eine perspektivische Seitenansicht einer erfindungsgemäßen Teilerspitze für einen Erntevorsatz gemäß Fig. 1;
- Fig. 3: eine perspektivische Ansicht von schräg oben auf die Teilerspitze gemäß Fig. 2;
- Fig. 4: eine Ansicht der Teilerspitze von unten.

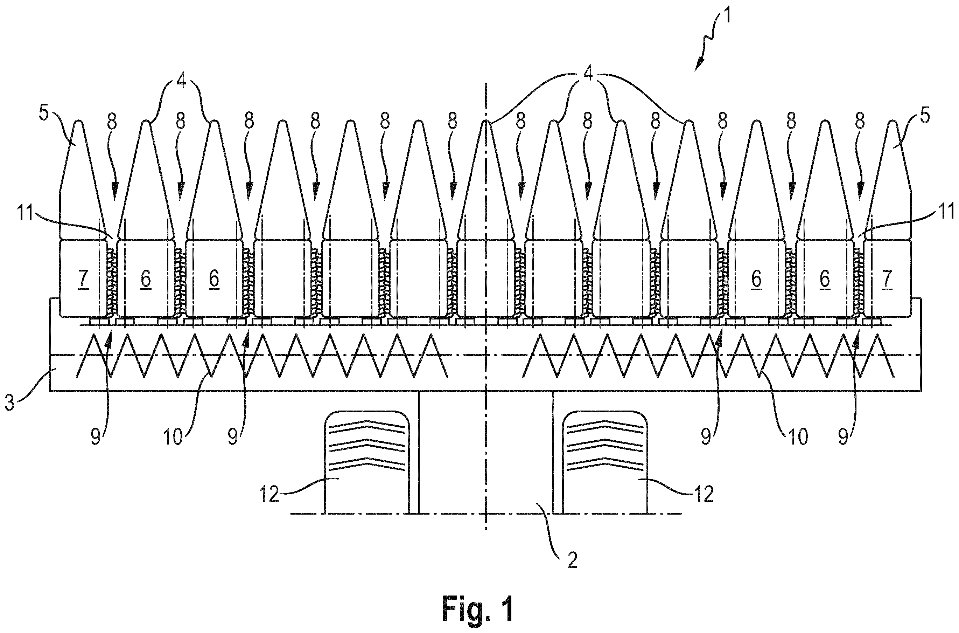

Die Darstellung in Fig.1 zeigt eine schematische Darstellung eines Erntevorsatzes 1 zum Ernten von in Reihen stehendem Erntegut in einer Draufsicht. Der Erntevorsatz 1 kommt insbesondere zum Ernten von Mais oder dergleichen Körnerfrüchten zur Anwendung. Der Erntevorsatz 1 stellt ein Pflückvorsatzgerät für einen Mähdrescher oder einen Feldhäcksler dar. Es kann aber prinzipiell auch als Anbaugerät Anwendung finden. Bei dem dargestellten Ausführungsbeispiel ist dem Erntevorsatz 1 ein Schrägförderer 2 eines Mähdreschers nachgeordnet, der das Erntegut, beispielsweise Maiskolben, dem Bearbeitungsteil des über Räder 12 auf dem Boden abgestützten Mähdreschers oder Feldhäckslers zuführen kann.

Der Erntevorsatz 1 umfasst einen Maschinenrahmen 3, Teilerspitzen 4 und äußere Abteiler 5, nebeneinander liegende Pflückeinheiten 8 mit paarweise angeordneten Pflückwalzen 9, die unterhalb der sie teilweise überdeckenden Abdeckhauben 6 und äußeren Abdeckungen 7 angeordnet sind, und hinter den Pflückeinheiten 8 liegende Querfördervorrichtungen, beispielsweise Querförderschnecken 10. Zur Abgabe des gepflückten Erntegutes an den Schrägförderer 2 des Mähdreschers oder Feldhäckslers weist der Maschinenrahmen 3 eine im Wesentlichen mittig angeordnete Öffnung auf. Der als Pflückspalt 12 bezeichnete Abstand der Pflückwalzen 9 ist veränderbar, so dass sich eine variable Weite des Pflückspaltes 11 einstellen lässt.

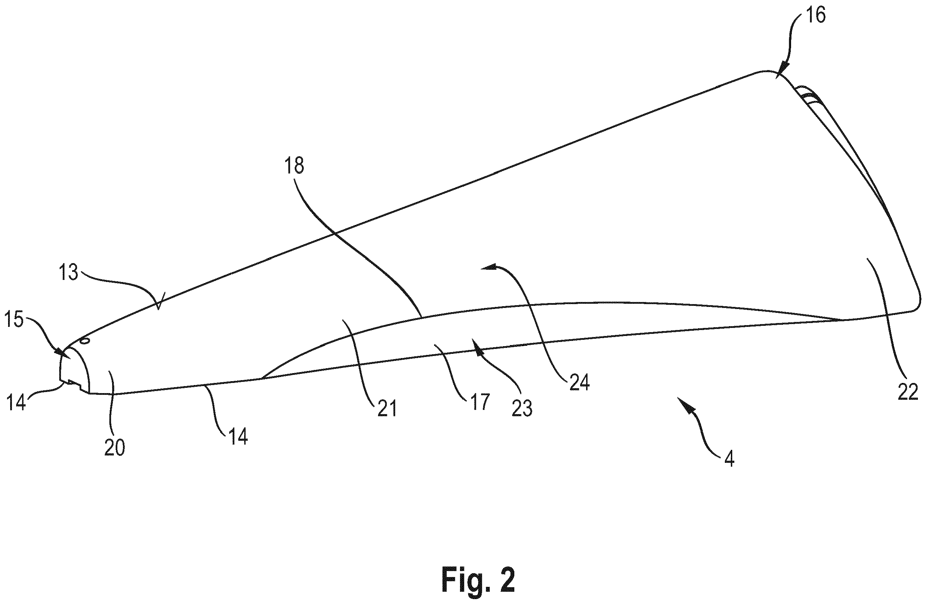

In Fig. 2 ist eine perspektivische Seitenansicht einer erfindungsgemäßen Teilerspitze 4 dargestellt. Die Teilerspitze 4 ist als zur Längsachse der Teilerspitze 4 achsensymmetrisches Hohlprofil ausgeführt und weist in axialer Richtung einen im Wesentlichen bogenförmigen Verlauf ihrer Mantelfläche 13 auf. Die Unterseite der Teilerspitze 4 ist offen ausgeführt und von Randabschnitten 14 begrenzt, welche in einer gemeinsamen horizontalen Ebene liegen. Ausgehend von einem vorderen, dem Maschinenrahmen 3 abgewandten Ende 15 nimmt der Radius der Teilerspitze 4 in Richtung des hinteren, dem Maschinenrahmen 3 zugewandten Ende 16 der Teilerspitze 4 zu, so dass sich ein zumindest abschnittsweise kegelstumpfförmiger Aufbau einstellt. Die Teilerspitze 4 ist in drei Segmente unterteilt. Die Teilerspitze 4 umfasst ein Anfangssegment 20, welches sich ausgehen von dem vorderen Ende 15 in Richtung des Maschinenrahmens 3 erstreckt, ein Mittelsegment 21 und ein Endsegment 22, welches mit dem hinteren, dem Maschinenrahmen 3 zugewandten Ende 16 der Teilerspitze 4 abschließt. Das Anfangssegment 20 weist einen bogenförmigen Querschnitt auf, der sich durch einen gleichförmig zunehmenden Radius auszeichnet. Das Endsegment 22 weist ebenfalls einen bogenförmigen Querschnitt auf, welcher im Wesentlichen mit dem radialen Verlauf des Anfangssegmentes 20 korrespondiert. Das heißt, die Zunahme des Radius in axialer Richtung bleibt in dem Anfangssegment 20 und in dem Endsegment 22 im Wesentlichen konstant.

Das hiervon abweichend ausgeführte Mittelsegment 21 weist beidseitig untere Abschnitte 23 auf, welche von einem oberen Abschnitt 24 überspannt sind. Der untere Abschnitt 23 des Mittelsegmentes 21 ist durch die Randabschnitte 14 zu der offenen Unterseite des Halmteilers 4 hin begrenzt. Der obere Abschnitt 24 verbindet die beiden unteren Abschnitte 23 miteinander. Die Querschnittsform in dem oberen Abschnitt 24 des Mittelsegments 21 entspricht einer im Wesentlichen bogenförmigen Kontur, während die Querschnittsform in dem unteren Abschnitt 23 des Mittelsegments 21 eine im Wesentlichen trapezförmige Kontur aufweist. Diese unterschiedliche Ausgestaltung des Anfangssegmentes 20 und des Mittelsegments 21 hat den Vorteil, dass bei der Gutannahme zunächst das konventionell geformte Anfangssegment 20 mit dem Erntegut in Eingriff gebracht wird, und erst nach einer kurzen Wegstrecke entlang des Anfangssegmentes 20 kommt das sich in axialer Richtung ändernde, eine Einschnürung aufweisende Mittelsegment 21 bei der Gutführung positiv zum Tragen.

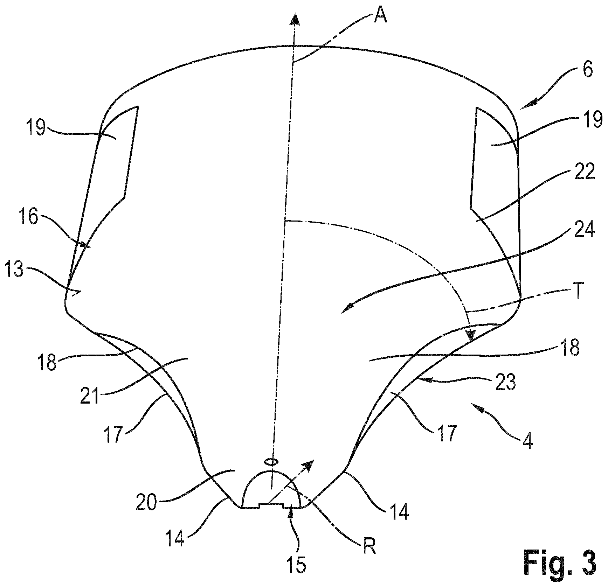

Die Darstellung in Fig. 3 zeigt eine perspektivische Ansicht von schräg oben auf die Teilerspitze 4 gemäß Fig. 2. In die Darstellung der Teilerspitze 4 in Fig. 3 wurden strichlinierte mit A, T, R bezeichnete Hilfslinien eingefügt, welche die axiale Richtung A, die tangentiale Richtung T und die radiale Richtung R veranschaulichen. Die Ansicht gemäß Fig. 3 verdeutlicht den konkaven Verlauf der einander gegenüberliegenden Randabschnitte 14 der Teilerspitze 4. Der konkave Verlauf der Randabschnitte 14 stellt sich dadurch ein, dass die Teilerspitze 4 abschnittsweise derart geformt ist, dass sich zwischen ihrem vorderen Ende 15 und ihrem hinteren Ende 16 in axialer Richtung A der Teilerspitze 4 einander gegenüberliegende, in die Randabschnitte 14 mündende Wandabschnitte 17 der Mantelfläche 13 ausbilden, die einen sich in tangentialer Richtung T der Teilerspitze 4 abschnittsweise verringernden Radius aufweisen. Die Verringerung der Radien entlang der axialen Erstreckung des Wandabschnittes 17 bildet in radialer Richtung R eine Einschnürung aus, die sich ausgehend von einer Wandabschnittskante 18 bis zu dem jeweiligen Randabschnitt 14 erstreckt. Die Wandabschnittskante 18 bildet den Übergang zwischen der Mantelfläche 13 und den Wandabschnitten 17. Oberhalb dieser Wandabschnitte 17 beziehungsweise der Wandabschnittskante 18 ist der jeweilige Radius der Mantelfläche 13 in tangentialer Richtung konstant, so dass der im Wesentlichen bogenförmige Verlauf der Mantelfläche 13 erhalten bleibt. Die jeweilige in axialer Richtung A verlaufende Wandabschnittskante 18 beschreibt im Wesentlichen einen bogenförmigen Verlauf. Dieser bogenförmige Verlauf der Wandabschnittskante 18 sowie der Verlauf des darunter befindlichen Wandabschnittes 17 sind derart ausgebildet, dass sich in axialer Richtung A gesehen eine konstante Neigung einstellt. Das heißt, Erntegut, welches entlang des Mittelsegmentes 21 an dem Wandabschnitt 17 vorbeigeführt wird, hat eine im Wesentlichen konstante Winkelgeschwindigkeit.

Auf Grund der abschnittsweisen Verringerung der Radien zu den Randabschnitten 14 hin, weisen die Wandabschnitte 17 in tangentialer Richtung T der Teilerspitze 4 einen im Wesentlichen planen Oberflächenverlauf auf. Dabei nimmt wegen des in axialer Richtung A im Wesentlichen bogenförmigen Verlaufs der Teilerspitze 4 die Breite der einander gegenüberliegenden Wandabschnitte 17 in tangentialer Richtung T zu, bis ein Maximum erreicht ist. Das heißt, die jeweilige Wandabschnittskante 18 steigt ausgehend von dem vorderen Ende 15 bis zu einem maximalen Abstand zu dem die nach unten offene Teilerspitze 4 begrenzenden Randabschnitt 14 an und fällt in Richtung des hinteren Endes 16 der Teilerspitze 4 ab.

Der Verlauf der Randabschnitte 14 beziehungsweise der Wandabschnitte 17 in axialer Richtung A kann stetig oder unstetig ausgebildet sein. Im letzteren Fall kann der Verlauf der Randabschnitte 14 beziehungsweise der Wandabschnitte 17 in axialer Richtung A abschnittsweise einem Polygonzug entsprechen.

Wie aus der Darstellung in Fig. 3 weiter ersichtlich ist, schließt sich an die Teilerspitze 4 die Abdeckhaube 6 an. Die Abdeckhaube 6 ist ebenfalls im Wesentlichen bogenförmig ausgeführt, weist jedoch im Gegensatz zu der Teilerspitze 4 einen konstanten oder nahezu konstanten radialen Verlauf auf. Auf der Abdeckhaube 6 können plattenförmige Elemente 19 angeordnet sein, welche als auswechselbare Verschleißteile ausgebildet sind. Die plattenförmigen Elemente 19 erstrecken sich ausgehend von dem hinteren Ende der Teilerspitze 4 in Richtung des Maschinenrahmens 3. Hierzu weisen die plattenförmigen Elemente 19 eine in axialer und tangentialer Richtung A, T mit der Abdeckhaube 6 korrespondierende Form auf. Die Anordnung an den Außenseiten der Abdeckhaube 6 ist unmittelbar benachbart zum Pflückspalt 12 der Pflückeinheit 8 gewählt, da dies der Bereich der Abdeckhaube 6 ist, in welchem das stängelige Erntegut durch das Einziehen mittels der Pflückwalzen 9 in Richtung des Pflückspaltes 12 mit dieser am intensivsten in Berührung kommt. Die abrasive Wirkung des eingezogenen Erntegutes führt im Allgemeinen zu einem Verschleiß der Abdeckhaube 6, der von Zeit zu Zeit einen Austausch notwendig macht. Durch die lösbar an der Abdeckhaube 6 als auch an den äußeren Abdeckungen 7 angeordneten plattenförmigen Elemente 19 in diesem besonders verschleißanfälligen Bereich ist nur der Austausch der jeweiligen plattenförmigen Elemente 19 erforderlich, nicht jedoch der kompletten Abdeckhaube 6 beziehungsweise der äußeren Abdeckung 7.

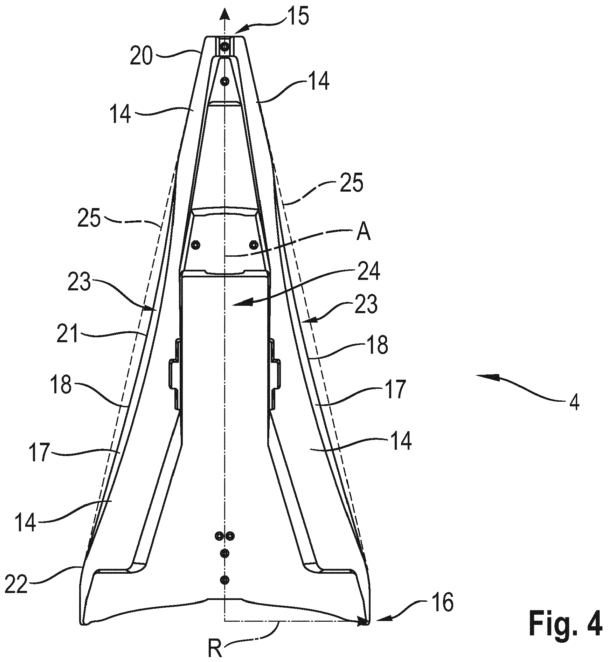

Die Darstellung in Fig. 4 zeigt die Teilerspitze 4 in einer Ansicht von unten. Wie aus der Ansicht ersichtlich ist, weist das Anfangssegment 20 einen sich in axialer Richtung A abschnittsweise aufweitenden Verlauf auf. Eine gedachte Verbindungslinie 25, die die jeweiligen Randabschnitte 14 des Anfangssegmentes 20 und des Endsegmentes 22 durch Verlängerung miteinander verbindet, verdeutlich den konstanten Verlauf der Zunahme des Radius in axialer Richtung A, unterbrochen durch die hiervon abweichende Ausbildung des Mittelsegmentes 21 der Teilerspitze 4.

### Bezugszeichenliste

- 1: Erntevorsatz
- 2: Schrägförderer
- 3: Maschinenrahmen
- 4: Teilerspitze
- 5: Äußere Abteiler
- 6: Abdeckhaube
- 7: Äußere Abdeckung
- 8: Pflückeinheit
- 9: Pflückwalze
- 10: Querförderschnecke
- 11: Pflückspalt
- 12: Rad
- 13: Mantelfläche
- 14: Randabschnitt
- 15: Vorderes Ende
- 16: Hinteres Ende
- 17: Wandabschnitt
- 18: Wandabschnittskante
- 19: Plattenförmiges Element
- 20: Anfangssegment
- 21: Mittelsegment
- 22: Endsegment
- 23: Unterer Abschnitt von 21
- 24: Oberer Abschnitt von 21
- 25: Gedachte Verbindungslinie

- A: Axiale Richtung
- T: Tangentiale Richtung
- R: Radiale Richtung

## Patentansprüche

1. Erntevorsatz (1) für in Reihen stehendes Erntegut, mit zumindest zwei achsparallel zueinander an einem Maschinenrahmen (3) angeordneten Pflückeinheiten (8), die jeweils von einer sich in Längsrichtung der Pflückeinheit (8) erstreckenden, nach unten offenen, von in einer gemeinsamen horizontalen Ebene liegenden Randabschnitten (14) begrenzten Teilerspitze (4), welche als zur Längsachse der Teilerspitze (4) achsensymmetrisches Hohlprofil ausgeführt ist und einen im Wesentlichen bogenförmigen Querschnitt mit in Längsrichtung der Pflückeinheit (8) zunehmenden Radius aufweist, zumindest abschnittsweise bedeckt sind, wobei die Teilerspitze (4) ein Anfangssegment (20), welches sich ausgehend von einem vorderen Ende der Teilerspitze (4) in Richtung des Maschinenrahmens (3) erstreckt, ein Mittelsegment (21) und ein Endsegment (22), welches mit einem hinteren, dem Maschinenrahmen (3) zugewandten Ende (16) der Teilerspitze (4) abschließt, umfasst, wobei zwischen dem Anfangssegment (20) und dem Endsegment (22) ein Mittelsegment (21) vorgesehen ist, **dadurch gekennzeichnet, dass** die die Teilerspitze (4) an ihrer offenen Unterseite in Längsrichtung begrenzenden, in einer Ebene liegenden Randabschnitte (14) des Mittelsegments einen abschnittsweise im Wesentlichen konkaven Verlauf aufweisen, der eine beidseitige Einschnürung der Teilerspitze (4) ausbildet.

2. Erntevorsatz (1) nach Anspruch 1, **dadurch gekennzeichnet, dass** das Mittelsegment (21) an seiner offenen Unterseite in diese in Längsrichtung begrenzenden Randabschnitte (14) mündende Wandabschnitte (17) aufweist, die einen abschnittsweise im Wesentlichen konkaven Verlauf aufweisen.

3. Erntevorsatz (1) nach Anspruch 1 oder 2, **dadurch gekennzeichnet, dass** die Teilerspitze (4) zwischen ihrem Anfangssegment (20) und ihrem Endsegment (22) ein Mittelsegment (21) aufweist, dessen Querschnittsform in einem oberen Abschnitt (24) eine im Wesentlichen bogenförmige Kontur und in einem unteren Abschnitt (23) eine im Wesentlichen trapezförmige Kontur aufweist.

4. Erntevorsatz (1) nach dem Anspruch 2, **dadurch gekennzeichnet, dass** die jeweilige Teilerspitze (4) zwischen einem sich verjüngenden vorderen Ende (15) und einem sich aufweitenden hinteren Ende (16) mit einander gegenüberliegenden in die Randabschnitte (14) mündenden Wandabschnitten (17) versehen ist, die einen sich in tangentialer Richtung der Teilerspitze (4) verringernden Radius aufweisen.

5. Erntevorsatz (1) nach einem der Ansprüche 2 oder 4, **dadurch gekennzeichnet, dass** die Randabschnitte (14) und/oder die Wandabschnitte (17) in axialer Richtung der Teilerspitze (4) einen abschnittsweise stetigen oder unstetigen Verlauf aufweisen.

6. Erntevorsatz (1) nach dem Anspruch 4, **dadurch gekennzeichnet, dass** die einander gegenüberliegenden Wandabschnitte (17) in tangentialer Richtung der Teilerspitze (4) einen im Wesentlichen ebenen Oberflächenverlauf aufweisen.

7. Erntevorsatz (1) nach einem der Ansprüche 2 bis 6, **dadurch gekennzeichnet, dass** die Wandabschnitte (17) symmetrisch zueinander angeordnet sind.

8. Erntevorsatz (1) nach dem Anspruch 6, **dadurch gekennzeichnet, dass** die ebenen Wandabschnitte (17) eine Neigung zur Vertikalen aufweisen.

9. Erntevorsatz (1) nach Anspruch 8, **dadurch gekennzeichnet, dass** die Neigung der einander gegenüberliegenden ebenen Wandabschnitte (17) nach innen gerichtet ist.

10. Erntevorsatz (1) nach einem der Ansprüche 2,6,8 oder 9, **dadurch gekennzeichnet, dass** die Randabschnitte (14) im Bereich des vorderen Endes (15) der Teilerspitze (4) einen abschnittsweise divergierenden Verlauf aufweisen.

11. Erntevorsatz (1) nach einem der Ansprüche 2,6,8 oder 9, **dadurch gekennzeichnet, dass** die Randabschnitte (14) im Bereich des hinteren Endes (16) der Teilerspitze (4) einen abschnittsweise divergierenden Verlauf aufweisen.

12. Erntevorsatz (1) nach einem der Ansprüche 2 bis 11, **dadurch gekennzeichnet, dass** die Teilerspitze (4) abschnittsweise derart geformt ist, dass sich zwischen ihrem vorderen Ende (15) und ihrem hinteren Ende (16) in axialer Richtung (A) der Teilerspitze (4) einander gegenüberliegende, in die Randabschnitte (14) mündende Wandabschnitte (17) eine Mantelfläche (13) ausbilden, die einen sich in tangentialer Richtung (T) der Teilerspitze (4) abschnittsweise verringernden Radius aufweisen, wobei die Verringerung der Radien entlang der axialen Erstreckung des Wandabschnittes (17) in radialer Richtung (R) eine Einschnürung ausbildet, die sich ausgehend von einer Wandabschnittskante (18) bis zu dem jeweiligen Randabschnitt (14) erstreckt, wobei die Wandabschnittskante (18) den Übergang zwischen der Mantelfläche (13) und den Wandabschnitten (17) bildet, wobei oberhalb dieser Wandabschnitte (17) beziehungsweise der Wandabschnittskante (18) der jeweilige Radius der Mantelfläche (13) in tangentialer Richtung (T) konstant ist, so dass der im Wesentlichen bogenförmige Verlauf der Mantelfläche (13) erhalten bleibt, wobei die jeweilige in axialer Richtung (A) verlaufende Wandabschnittskante (18) im Wesentlichen einen bogenförmigen Verlauf beschreibt, wobei dieser bogenförmige Verlauf der Wandabschnittskante (18) sowie der Verlauf des darunter befindlichen Wandabschnittes (17) derart ausgebildet sind, dass sich in axialer Richtung (A) gesehen eine konstante Neigung einstellt.

## Claims

1. Harvesting header (1) for crop standing in rows, with at least two picking units (8) arranged axially parallel to one another on a machine frame (3), each of which is covered at least in sections by a divider tip (4) extending in the longitudinal direction of the picking unit (8), open at the bottom, delimited by edge sections (14) lying in a common horizontal plane, which is designed as a hollow profile axially symmetrical to the longitudinal axis of the divider tip (4) and has a substantially curved cross-section with a radius increasing in the longitudinal direction of the picking unit (8), wherein the divider tip (4) comprises a start segment (20), which extends starting from a front end of the divider tip (4) in the direction of the machine frame (3), a middle segment (21) and an end segment (22), which finishes with a rear end (16) of the divider tip (4) facing the machine frame (3) wherein, between the start segment (20) and the end segment (22), a middle segment (21) is provided, **characterized in that** the edge sections (14) of the middle segment, delimiting the divider tip (4) at its open underside in the longitudinal direction and lying in a plane, have a course substantially concave in sections, which forms a narrowing on both sides of the divider tip (4).

2. Harvesting header (1) according to claim 1, **characterized in that** the middle segment (21) has, at its open underside, wall sections (17), leading into these edge sections (14) delimiting in the longitudinal direction, which have a course substantially concave in sections.

3. Harvesting header (1) according to claim 1 or 2, **characterized in that** the divider tip (4) has, between its start segment (20) and its end segment (22), a middle segment (21) the cross-sectional shape of which has a substantially curved contour in an upper section (24) and a substantially trapezoidal contour in a lower section (23).

4. Harvesting header (1) according to claim 2, **characterized in that**, between a tapering front end (15) and a widening rear end (16), the respective divider tip (4) is provided with wall sections (17), lying opposite one another and leading into the edge sections (14), which have a radius decreasing in the tangential direction of the divider tip (4).

5. Harvesting header (1) according to one of claims 2 or 4, **characterized in that** the edge sections (14) and/or the wall sections (17) have a course that is constant or non-constant in sections in the axial direction of the divider tip (4).

6. Harvesting header (1) according to claim 4, **characterized in that** the wall sections (17) lying opposite one another have a substantially flat surface course in the tangential direction of the divider tip (4).

7. Harvesting header (1) according to one of claims 2 to 6, **characterized in that** the wall sections (17) are arranged symmetrically to one another.

8. Harvesting header (1) according to claim 6, **characterized in that** the flat wall sections (17) have an inclination to the vertical.

9. Harvesting header (1) according to claim 8, **characterized in that** the inclination of the flat wall sections (17) lying opposite one another is directed inwards.

10. Harvesting header (1) according to one of claims 2, 6, 8 or 9, **characterized in that** the edge sections (14) have a course diverging in sections in the area of the front end (15) of the divider tip (4).

11. Harvesting header (1) according to one of claims 2, 6, 8 or 9, **characterized in that** the edge sections (14) have a course diverging in sections in the area of the rear end (16) of the divider tip (4).

12. Harvesting header (1) according to one of claims 2 to 11, **characterized in that** the divider tip (4) is shaped in sections such that, between its front end (15) and its rear end (16) in the axial direction (A) of the divider tip (4), wall sections (17) [of a] shell (13), lying opposite one another and leading into the edge sections (14), are formed, which have a radius decreasing in sections in the tangential direction (T) of the divider tip (4), wherein the decrease in the radii along the axial extent of the wall section (17) forms, in the radial direction (R), a narrowing which extends starting from a wall section edge (18) as far as the respective edge section (14), wherein the wall section edge (18) forms the transition between the shell (13) and the wall sections (17), wherein above these wall sections (17) or the wall section edge (18) the respective radius of the shell (13) is constant in the tangential direction (T), with the result that the substantially curved course of the shell (13) is maintained, wherein the respective wall section edge (18) running in the axial direction (A) describes a substantially curved course, wherein this curved course of the wall section edge (18) as well as the course of the wall section (17) located under it are formed such that, viewed in the axial direction (A), a constant inclination is established.

## Revendications

1. Outil frontal de récolte (1) pour du produit de récolte disposé en rangs, comprenant au moins deux unités de cueillage (8), lesquelles sont disposées sur un bâti de machine (3) avec leurs axes parallèles entre eux et sont chacune recouvertes au moins par endroits par une pointe de diviseur (4) qui s'étend dans la direction longitudinale de l'unité de cueillage (8), est ouverte vers le bas et est limitée par des portions de bord (14) disposées dans un plan horizontal commun et qui est conformée en profilé creux symétrique axialement par rapport à l'axe longitudinal de la pointe de diviseur (4) et présente une section transversale sensiblement arquée avec un rayon décroissant dans la direction longitudinale de l'unité de cueillage (8), la pointe de diviseur (4) comprenant un segment initial (20), qui s'étend à partir d'une extrémité avant de la pointe de diviseur (4) en direction du bâti de machine (3), un segment central (21) et un segment final (22) qui coïncide avec une extrémité arrière (16) de la pointe de diviseur (4) tournée vers le bâti de machine (3), entre le segment initial (20) et le segment final (22) étant prévu un segment central (21), **caractérisé en ce que** les portions de bord (14) du segment central qui limitent dans la direction longitudinale la pointe de diviseur (4) sur son côté inférieur ouvert présentent un tracé sensiblement concave qui forme un rétrécissement des deux côtés de la pointe de diviseur (4).

2. Outil frontal de récolte (1) selon la revendication 1, **caractérisé en ce que** le segment central (21) comporte, sur son côté inférieur ouvert, des portions de paroi (17) qui débouchent dans des portions de bord (14) limitant celui-ci dans la direction longitudinale et qui présentent un tracé par endroits sensiblement concave.

3. Outil frontal de récolte (1) selon la revendication 1 ou 2, **caractérisé en ce que** la pointe de diviseur (4) présente, entre son segment initial (20) et son segment final (22), un segment central (21) dont la forme en coupe transversale présente, dans une portion supérieure (24), un contour sensiblement arqué et, dans une portion inférieure (23), un contour sensiblement trapézoïdal.

4. Outil frontal de récolte (1) selon la revendication 2, **caractérisé en ce que** chaque pointe de diviseur (4) est pourvue, entre une extrémité avant rétrécie (15) et une extrémité arrière élargie (16), de portions de paroi (17) qui débouchent en opposition mutuelle dans les portions de bord (14) et qui présentent un rayon décroissant dans la direction tangentielle de la pointe de diviseur (4).

5. Outil frontal de récolte (1) selon une des revendications 2 ou 4, **caractérisé en ce que** les portions de bord (14) et/ou les portions de paroi (17) présentent, dans la direction axiale de la pointe de diviseur (4), un tracé par endroits continu ou discontinu.

6. Outil frontal de récolte (1) selon la revendication 4, **caractérisé en ce que** les portions de paroi en opposition (17) présentent, dans la direction tangentielle de la pointe de diviseur (4), un tracé superficiel sensiblement plan.

7. Outil frontal de récolte (1) selon une des revendications 2 à 6, **caractérisé en ce que** les portions de paroi (17) sont disposées symétriquement l'une à l'autre.

8. Outil frontal de récolte (1) selon la revendication 6, **caractérisé en ce que** les portions de paroi planes (17) présentent une inclinaison par rapport à la verticale.

9. Outil frontal de récolte (1) selon la revendication 8, **caractérisé en ce que** l'inclinaison des portions de paroi planes en opposition (17) est dirigée vers l'intérieur.

10. Outil frontal de récolte (1) selon une des revendications 2, 6, 8, 9, **caractérisé en ce que** les portions de bord (14) présentent, dans la zone de l'extrémité avant (15) de la pointe de diviseur (4), un tracé par endroits divergent.

11. Outil frontal de récolte (1) selon une des revendications 2, 6, 8 ou 9, **caractérisé en ce que** les portions de bord (14), dans la zone de l'extrémité arrière (16) de la pointe de diviseur (4), présentent un tracé par endroits divergent.

12. Outil frontal de récolte (1) selon une des revendications 2 à 11, **caractérisé en ce que** la pointe de diviseur (4) est formée par endroits de façon que des portions de paroi (17), qui sont en opposition mutuelle entre son extrémité avant (15) et son extrémité arrière (16) dans la direction axiale (A) de la pointe de diviseur (4) et qui débouchent dans les portions de bord (14), forment une surface enveloppante (13) qui présente un rayon décroissant par endroits dans la direction tangentielle (T) de la pointe de diviseur (4), la décroissance des rayons suivant l'extension axiale de la portion de paroi (17) formant, dans la direction radiale (R), un rétrécissement qui s'étend depuis une arête de portion de paroi (18) jusqu'à la portion de bord (14) correspondante, l'arête de portion de paroi (18) formant la transition entre la surface enveloppante (13) et les portions de paroi (17), au-dessus de ces portions de paroi (17), respectivement de l'arête de portion de paroi (18), le rayon respectif de la surface enveloppante (13) étant constant dans la direction tangentielle (T), de sorte que le tracé sensiblement arqué de la surface enveloppante (13) reste maintenu, l'arête de portion de paroi (18) respective qui s'étend dans la direction axiale (A) décrivant sensiblement un tracé arqué, ce tracé arqué de l'arête de portion de paroi (18) ainsi que le tracé de la portion de paroi (17) située en dessous étant conformés de façon à obtenir, vue dans la direction axiale (A), une inclinaison constante.
